Europäisches Patentamt

European Patent Office

Office européen des brevets

(19)

(11) Veröffentlichungsnummer: **0 169 997 B1**

# EUROPÄISCHE PATENTSCHRIFT

(12)

(45) Veröffentlichungstag der Patentschrift: **18.09.91**

(51) Int. Cl.⁵: **B01D 53/34**

(21) Anmeldenummer: **85106479.0**

(22) Anmeldetag: **25.05.85**

(54) **Verfahren zur Reinigung von Rauchgas.**

(30) Priorität: **28.07.84 DE 3427941**
**04.10.84 DE 3436339**

(43) Veröffentlichungstag der Anmeldung:
**05.02.86 Patentblatt 86/06**

(45) Bekanntmachung des Hinweises auf die
Patenterteilung:
**18.09.91 Patentblatt 91/38**

(84) Benannte Vertragsstaaten:
**CH FR GB LI NL SE**

(56) Entgegenhaltungen:
**EP-A- 0 042 509**
**DE-A- 3 018 319**
**DE-B- 1 205 705**
**DE-C- 3 320 466**
**US-A- 4 297 332**

(73) Patentinhaber: **KERNFORSCHUNGSZENTRUM KARLSRUHE GMBH**
**Weberstrasse 5 Postfach 3640**
**W-7500 Karlsruhe 1(DE)**

(72) Erfinder: **Vogg, Hubert, Prof. Dr.**
**De-Coster-Strasse 2**
**W-7500 Karlsruhe(DE)**
Erfinder: **Braun, Hartmut, Dr.**
**Weingässle 32**
**W-7505 Ettlingen(DE)**
Erfinder: **Jindra, Gabriele**
**Hofstrasse 5**
**W-7523 Graben-Neudorf(DE)**

## Beschreibung

Die Erfindung betrifft ein Verfahren zur Reinigung von Rauchgas, das bei der Verbrennung von Abfallstoffen entsteht und sowohl Feststoffe unterschiedlichster Zusammensetzung als auch Schadgase und Schwermetalle in Gasform enthält, bei dem die hauptsächlichen Feststoffanteile in einer Trennanlage aus dem Rauchgas entfernt und als Flugasche gesammelt werden, und anschließend bei dem eine Wäsche des Rauchgases in einer Kondensations/Waschanlage zum Zwecke der Bindung von Schadgasen sowie der restlichen Feststoffanteile erfolgt, wobei der im Rauchgas enthaltene Wasserdampf HCl und die Schwermetalle abgeschieden werden und das Kondensat dazu benutzt wird, die löslichen Schwermetalle aus der Flugasche herauszulösen und die löslichen Schwermetalle einer Fällung unterworfen und aus dem Prozeß ausgeschleust werden.

In der Rauchgasreinigung werden die festen, flüssigen oder gasförmigen Schadstoffe aus dem Rauchgas abgeschieden mit dem Ziel, die Umweltbeeinträchtigung auf ein erträgliches Maß zu reduzieren. Prinzipiell erfolgt die Abtrennung von Schadstäuben aus den Gasen durch mechanische und elektrische Verfahren sowie bei der Naßentstaubung durch Absorption, Adsorption oder Chemisorption. Grundverfahren der Schadgasabscheidung sind die Absorption, die Adsorption, die Kondensation sowie chemische Reaktionsprozesse. Bei der Naßwäsche fallen Schlämme, Salze und Abwässer an.

In Rauchgasreinigungsanlagen werden häufig mehrere Grundverfahren zu einem Gesamtverfahren kombiniert. Eines der gebräuchlichsten Müllverbrennungsverfahren sieht rauchgasseitig die Abgasreinigung von Stäuben durch Elektro- oder Gewebefilter und auch die Teilentfernung der Schadgase HCl, $SO_2$, HF in der Abluft durch saure oder alkalische Behandlungsmethoden vor oder hinter der Filteranlage vor (Abfallwirtschaft an der TU Berlin, Bd. 7, S. 1 - 41). Gasförmig vorliegende Schwermetalle, z.B. Hg, lassen sich verläßlich bisher nur durch Naßverfahran nach den Filtern entfernen.

Ein außerordentlicher Nachteil der üblichen Verfahren ist die Tatsache, daß je verbrannte Tonne Müll ca. 30 kg stark halogenhaltige Flugstäube anfallen, in denen Schwermetallstoffe teilweise leicht mobilisierbar vorliegen. Eine Verwertung der Stäube aus der Rauchgasentstaubung findet deshalb in zunehmenden Maße nicht mehr statt, man glaubt vielmehr, die Flugstäube nur noch unter besonderen Vorschriftsnaßregeln auf Deponien ablagern zu können. Die sichere Entfernung der Schwermetallschadstoffe aus dem Ökosystem ist vor allem unter Langzeitaspekten dennoch nicht garantiert. Eine vorrangige Problematik in bezug auf die Schadstoffe Hg, Cd, Pb, Sb, Sn, Zn, u.a. in den Flugaschen bzw. im Schadgas und/oder in der Schlacke von Müllverbrennungsanlagen bleibt bestehen.

Darüber hinaus kommt es beim Müllverbrennungsprozeß aufgrund der sehr heterogenen Zusammensetzung der Abfälle zu vielfältigen chemischen Reaktionen. Einerseits werden bei der vorgeschriebenen Verbrennungstemperatur von 800°C viele Produkte zersetzt oder verdampft, andererseits durchlaufen die in die Gasphase freigesetzten Produkte unter kontinuierlicher Abkühlung bis auf ca. 200°C eine längere Wegstecke, auf der Rekombinationsreaktionen stattfinden oder neue Produkte sich bilden können. So verdanken beispielsweise chlorierte organische Verbindungen, aliphatische wie aromatische, ihre Existenz den oben beschriebenen Mechanismen. In aller Regel lagern sich die vorkommenden organischen Verbindungen an die im Rohgas vorhandenen Staub- oder Rußteilchen an. Die in den Filteranlagen, z.B. Elektrofiltern, ausgetragenen Flugaschen enthalten somit organische Chemikalien unterschiedlichster Zusammensetzung und in unterschiedlichsten Konzentrationen.

Problematisch werden diese organischen Verbindungen in den Flugaschen dann, wenn es sich um toxische Substanzen handelt, die die endgültige Entsorgung der Flugasche, z.B. auf einer Deponie, erschweren oder verhindern, wie chlorierte Dibenzodioxine bzw. Dibenzofurane.

Es hat sich auch herausgestellt, daß eine saure Lösung der Flugaschen, verbunden mit einer Abtrennung der mobilen Schwertmetallanteile von besonderem Vorteil ist. Die saure Laugung verändert den organischen Anteil von Schadstoffen zwar nicht, eröffnet aber wegen der verminderten Schwermetallanteile der Rückführung der behandelten Flugasche in den Verbrennungsraum. Dort werden in einem Hochtemperaturprozeß die restlichen Schwermetalle weiter fixiert.

Aus der DE-C-3 320 466 ist ein Verfahren zur Reinigung von Rauchgas bekannt, bei welchen das im Rauchgas enthaltene Quecksilber beim Auslaugprozeß an die Flugasche gebunden wird. Diese Flugasche wird dann mit dem Quecksilber zusammen in den Verbrennungsraum zurückgeführt, wodurch es sich im Kreislauf anreichert.

Des weiteren ist aus der EP-A-0 042 509 ein Verfahren bekannt, bei welchem Quecksilber bei der Chlorproduktion zurückgewonnen wird.

Dabei wird der quecksilberhaltige Abfall unter Zugabe von Sauerstoff erhitzt. Das dabei entstehende atomare Quecksilber wird in NaOH-haltigem Wasser gelöst und dem Prozeß wieder zugeführt.

Dabei kommt die Lösung jedoch nicht mehr mit adsorbierenden Materialien in Berührung.

EP 0 169 997 B1

Schließlich beschreibt die DE-A-3 018 319 ein Verfahren zum Entfernen von Quecksilber aus Abgasen, bei welchem das Quecksilber an Flugstaub angelagert wird, wobei man dem Abgasstrom gerade soviel Wasser zugibt, daß der Taupunkt nicht unterschritten wird.

Der Flugstaub wird nicht mit einer flüssigen Phase ausgewaschen.

Die der Erfindung zugrundeliegende Aufgabe besteht nunmehr darin, ein Verfahren zu bieten, bei dem bei der Rauchgasreinigung sowohl die gasförmigen Schwermetallschadstoffe als vor allem auch die in den Flugstäuben löslich vorliegenden Schwermetallschadstoffe in möglichst kompakter Form aus dem Rauchgasreinigungsprozeß entfernt werden können, wobei gleichzeitig eine gute Abreinigung von HCl, $SO_2$, $NO_x$ erreicht, sogar verbessert werden kann. Alle andere Rückstände sollen einer Wiederverwendbarkeit zugeführt werden können. Weiterhin sollen auch die in den Reststoffen enthaltenen organischen Schadstoffe noch zerstörbar bzw. zumindest jedoch in unbedenkliche Bestandteile überführbar sein.

Die Lösung dieser Aufgabe ist in den kennzeichnenden Merkmale des Patentanspruchs beschrieben

Bei dem erfindungsgemäßen Verfahren wird demnach zum Schutze der Umwelt darauf geachtet, daß sowohl die gasförmigen Schadstoffe wie HCl, $SO_2$, $NO_x$, der Flugstaub, die gasförmig anfallenden Metalle und insbesondere das Hg sowie die in den Flugstäuben und in der Schlacke der Verbrennungsanlage auftretenden löslichen Schwermetallschadstoffe eliminiert werden, derart, daß nur immobile Anteile verbleiben, die mit der Verbrennungsschlacke so vereinigt sind, daß eine Langzeitimmobilität und damit eine unbedenkliche Wiederverwendung bzw. Entsorgung gesichert ist. Durch das erfindungsgemäße Verfahren gelingt es, das im sauren Kondensat/Waschwasser gelöst vorhandene Quecksilber durch Reaktion mit den abgeschiedenen Filterstäuben aus der Fluidphase quantitativ abzuscheiden und in unlöslicher Form, d.h. im Sinne des erfindungsgemäßen Hauptanspruchs immobil in die Flugasche einzubinden. Will man die Asche zwecks erneuter Hochtemperaturreaktion in den Verbrennungsraum zurückführen, ist es zweckmäßig, das Quecksilber durch separate thermische Vorbehandlung abzutrennen und zurückzugewinnen.

Dadurch ergibt sich ein einziger Feststoffrückstandstrom, nämlich der Schlackestrom, der wegen der Hochtemperaturbehandlung keine organischen Schadstoffe mehr enthält (die abgetrennten Schwermetalle werden einer Wiederverwertung zugeführt). Das neue Verfahren schafft so einen in sich geschlossenen organischen Schadstoffkreislauf, der neben der Bildung dieser organischen Schadstoffe sofort auch deren thermische Zersetzung beinhaltet. Auf diese Weise wird der Austritt organischer Schadstoffe in die Umwelt weitgehend verhindert.

Das wesentlich Neue der Erfindung besteht auch darin, daß Verfahrensgrundlagen vorgegeben werden, die aus 1 Tonne Müll nicht wie bisher ca. 30 kg auf Deponien nur schwer zu entsorgende Flugascherückstände produzieren, sondern diese Menge auf ca. 1 kg, nämlich die eigentlichen Schwermetallschadstoffe und hier insbesondere das Hg und Cd, die dem Prozeß gezielt entzogen werden, reduzieren. Im Falle der Rückgewinnung von Quecksilber, Blei, Cadmium, z.B. aus den anfallenden Sulfiden, ist nunmehr sogar eine völlig rückstandslose Beseitigung möglich. Wie mit der Salzfracht verfahren wird, ist standortabhängig. Normalerweise kann sie bedenkenlos in einen Vorfluter abgegeben werden, da sie von den Schwermetallen befreit ist. Steht ein geeigneter Vorfluter nicht zur Verfügung, wird eine vorteilhafte andere Entsorgungsvariante, die sowohl Flugasche als auch die Salzfracht beinhaltet, z.B. durch Bituminierung, vorgegeben.

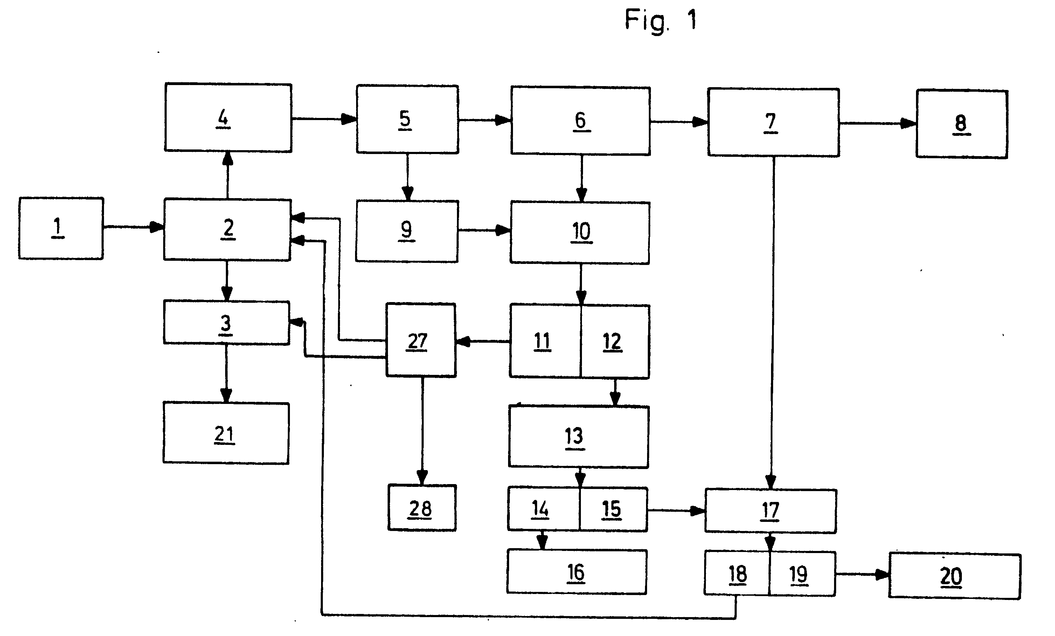

Die Erfindung wird im folgenden anhand einer Tabelle und der Figur mittels eines Ausführungsbeispiels näher erläutert.

In der Figur ist eine Ausführungsform des erfindungsgemäßen Verfahrens schematisch dargestellt. Der Müll 1 wird in die Verbrennungsanlage 2 gegeben und verbrannt. Hierbei entsteht Wärme mit dem Rauchgas und Schlacke 3. Ein Teil dem Wärme wird aus dem Rauchgas in einer Wärmetauscheranlage 4 abgezogen und anderweitig verwendet. Die Rauchoase werden nach dieser Wärmegewinnung wahlweise einer trockenen Vorreinigung mittels eines Zyklons oder eines Elektrofilters S bei ca. 180°C unterzogen, wobei, wie schon bei der Wärmegewinnung, darauf zu achten ist, daß keine Taupunktunterschreitung für ein Gas, Wasserdampf oder dergleichen erfolgt.

An die Trockenreinigung 5 schließt sich für die durch die Filter oder das Zyklon hindurchgetretenen Gase und Dämpfe ein Kondensations/Waschprozeß 6 an, bei dem der Wasserdampf bei gleichzeitiger Abreinigung von HCl und Hg anfällt. Das verbleibende Restrauchgas mit den Schadgaskomponenten $SO_2$, $NO_x$ wird anschließend einer alkalischen Wäsche 7 unterzogen und das Reingas dem Kamin 8 zugeführt.

Das Waschkondensat des Kondensationsprozesses 6 wird zum teilweisen Lösen der Schwermetalle aus der Flugasche 9 mit dieser Flugasche 9 in einem Lösereaktor 10 zusammengeführt. Hier kann ein mechanischer Vermischungsvorgang vorgesehen sein; das saure Waschkondensat (HCl-haltig) reagiert mit der alkalischen Flugasche, wobei ein End-pH von ca. 3 eingestellt wird. Hierbei wird das vorhandene Hg vollständig in die Flugasche eingebunden.

Diesem Lösereaktor 10 schließt sich eine Fest-Flüssig-Trennung (z.B. Sedimentation oder Zentrifuge) an. Es resultiert ein fester Rückstand 11 und eine Lösung 12, die sich im wesentlichen aus dem Waschkon-

3

densat (vor allem HCl) und den aus der Flugasche 9 entfernten Schwermetallen zusammensetzt.

Bei manchen Flugaschen 9 genügt bereits ein Teil der anfallenden Menge, um das Hg vollständig einzubinden. Der feste Rückstand II der Fest-Flüssig-Trennung kann zum Zwecke der Rückgewinnung von Hg auch einer gesonderten thermischen Behandlung 27 bei z.B. Rauchgastemperatur unterworfen werden, wobei das Hg desorbiert und in 28 gesammelt wird. Der feste Rückstand aus der Sonderbehandlung 27 kann daraufhin der Verbrennungsanlage 2 oder der Schlacke 3 direkt zugeführt werden.

Die saure Lösung 12 wird der Schwermetallfällung 13, vorzugsweise einer Sulfidfällung, unterzogen. Nach erneuter Fest-Flüssig-Trennung resultieren in kompakter Form I4 die Schwermetalle, die für ein eventuelles Recycling I6 zur Verfügung stehen, sowie eine immer noch saure Lösung I5, die mit der alkalischen Wäsche 7 zwecks Neutralisation (Neutralisationsanlage I7) vereinigt wird.

Der bei der Neutralisation I7 gebildete Klärschlamm I8 wird vorzugsweise ebenfalls wieder der Verbrennungsanlage 2 zugeführt und dort durch Hochtemperatur in die Schlacke 3 eingebunden. Diese Schlacke 3 steht der Wiederverwendung 2I, z.B. für den Straßenbau, zur Verfügung.

Enthält die Schlacke 3 trotz geeigneter Voraussetzungen bei der Temperaturbehandlung noch nicht eingebundene Schwermetallanteile, die ausgewaschen werden könnten, so erfolgt eine Nachbehandlung. Sie sieht eine schwachsaure Behandlung der Schlacke 3 vor, die bei einem pH-Wert von ca. 4 durchgeführt werden kann. Für die Nachbehandlung eignet sich in vorteilhafter Weise das Bad 2I, in dem die Schlacke 3 nach dem Verlassen der Verbrennungsanlage 2 in der Regel gelöscht bzw. abgekühlt wird. Das Bad 2I besteht aus Wasser. Es ist jedoch auch denkbar, die Schlacke 3 mit einem schwachsauren Nebel zu besprühen und die anfallende Löschbrühe zu sammeln und von Schwermetallen zu befreien.

Die bei der Neutralisation I7 vom Klärschlamm I8 befreite (geklärte) Lösung I9 wird in einen Vorfluter 20 zur Entsorgung der löslichen Chlorid- bzw. Sulfatfracht, die jedoch von Schwermetallschadstoffen gereinigt ist, abgegeben.

Beispiele zur Hg-Adsorption

Verhältnis Flugasche/Waschkondensat
= 37,6 kg/1000 l = 100 %.

| % Flugasche | ppm Hg im Filtrat |
|---|---|
| 0 | 7,8 |
| 5 | 5,1 |
| 10 | 2,4 |
| 15 | 0,97 |
| 20 | 0,45 |
| 25 | $\angle$0,1 |

Beispiele zur thermischen Hg-Desorption

| Temp.C | % Desorption |
|---|---|
| 50 | 0 |
| 200 | 2 |
| 250 | 86 |
| 300 | 98 |

Die Tabelle gibt einen Überblick über experimentelle Befunde von Dioxingehalten in Flugasche und zwar insbesondere in Restfeststoff vor und nach der Behandlung.

Tabelle

| Dioxingehalte /in ppb/ | Flugasche 9 | Restfeststoff 11 | Restfeststoff 11, 800° behandelt |
|---|---|---|---|
| Octa CDD | 70 | 270 | 11 |
| Hepta CDD | 23 | 42 | 8 |
| Hexa CDD | 23 | 20 | 5 |
| Penta CDD | 15 | 19 | 2 |
| Tetra CDD | 10 | 10 | 1 |

**Patentansprüche**

1. Verfahren zur Reinigung von Rauchgasen, das bei der Verbrennung von Abfallstoffen entsteht und sowohl Feststoffe unterschiedlichster Zusammensetzung als auch Schadgase und Schwermetalle in Gasform enthält, bei dem die hauptsächlichen Feststoffanteile in einer Trennanlage aus dem Rauchgas entfernt und als Flugasche gesammelt werden und anschließend eine Wäsche des Rauchgases in einer Kondensations/Waschanlage zum Zwecke der Bindung von Schadgasen sowie der restlichen Feststoffanteile erfolgt, wobei der im Rauchgas enthaltene Wasserdampf, HCl und die Schwermetalle abgeschieden werden und das Kondensat dazu benutzt wird, lösliche Schwermetalle aus der Flugasche herauszulösen und die löslichen Schwermetalle einer Fällung unterworfen und aus dem Prozeß ausgeschleust werden, dadurch gekennzeichnet, daß

a) das im sauren Kondensat/Waschwasser enthaltene, gelöste Quecksilber bei der Reaktion mit der Flugasche aus der Lösungsphase ausgeschieden und in unlöslicher Form in die Flugasche eingebunden wird,

b) dann das Quecksilber durch thermische Nachbehandlung der gelaugten Flugasche desorbiert und zurückgewonnen wird,

c) und dann die von Quecksilber befreite Flugasche erneut der Verbrennungsanlage zugeführt oder mit der abzuführenden Schlacke vereinigt wird.

## Claims

1. Method of cleaning flue gas, which is produced during the combustion of waste materials and contains solids of the most varied composition as well as polluting gases and heavy metals in gaseous form, wherein most of the solid ingredients are removed from the flue gas in a separation plant and collected as flue ash, and subsequently the flue gas is washed in a condensing-cum-washing plant for the purpose of bonding polluting gases and the remaining solid ingredients, the water vapour which is contained in the flue gas, HCl and the heavy metals being removed and the condensate being used to eliminate soluble heavy metals from the flue ash, and the soluble heavy metals are subjected to a precipitation and are discharged from the process, characterised in that

a) the dissolved mercury, which is contained in the acidic condensate-cum-washing water, is eliminated from the solution phase during the reaction with the flue ash and bonded into the flue ash in insoluble form,

b) then the mercury is desorbed by subsequent thermal treatment of the leached flue ash and recovered,

c) and then the flue ash, which has been freed of mercury, is again supplied to the combustion plant or is combined with the slag which is to be conducted away.

## Revendications

1. Procédé de purification de gaz de fumée, qui se forme au cours de la combustion de déchets et qui contient aussi bien des substances solides de compositions les plus diverses qu'aussi des gaz nocifs et des métaux lourds sous forme gazeuse, dans lequel la fraction importante des solides est éliminée dans une installation de séparation à partir du gaz de fumée et est rassemblée sous forme de cendres volantes et ensuite on effectue un lavage du gaz de fumée dans une installation de condensation/lavage aux fins de fixation des gaz nocifs ainsi que de la fraction résiduelle de substances solides, dans lequel la vapeur d'eau, HCL et les métaux lourds contenus dans le gaz de fumée sont séparés et le condensat est utilisé pour éliminer par dissolution les métaux lourds solubles des cendres volantes, on soumet les métaux lourds solubles à une précipitation et on les évacue du processus, caractérisé en ce que :

a) le mercure dissout, contenu dans le condensat/eau de lavage acide est séparé lors de la réaction avec les cendres volantes, de la phase de solution et est incorporé sous forme insoluble dans les cendres volantes,

b) ensuite le Mercure est désorbé par traitement ultérieur thermique des cendres volantes lessivées et est récupéré,

c) et ensuite les cendres volantes débarrassées du Mercure sont amenées à nouveau à l'installation de combustion et réunies aux scories qui doivent être évacuées.

Fig. 1